# EUROPÄISCHE PATENTSCHRIFT

(11) **EP 0 839 259 B1**
(45) Veröffentlichungstag und Bekanntmachung des Hinweises auf die Patenterteilung: **10.03.1999**
(21) Anmeldenummer: 96925721.1
(22) Anmeldetag: 11.07.1996
(51) Int. Cl.: F01D 5/14

(54) **TANDEM-SCHAUFELGITTER**
TANDEM TURBINE-BLADE CASCADE
GRILLE D'AUBES PROFILEES TANDEM

(30) Priorität: 14.07.1995 DE 19525699
(43) Veröffentlichungstag der Anmeldung: 06.05.1998
(73) Patentinhaber: BMW Rolls-Royce GmbH, 61402 Oberursel (DE)
(72) Erfinder: TOLGOS, Sokrates, D-15831 Mahlow (DE)
(74) Vertreter: Schmidt, Günter, Dipl.-Ing.
(86) Internationale Anmeldenummer: EP9603039
(87) Internationale Veröffentlichungsnummer: WO9704217

(56) Entgegenhaltungen:
- CH-A- 428 071
- DE-A- 2 524 555
- DE-A- 3 924 829
- FR-A- 982 027

## Beschreibung

Die Erfindung betrifft ein Tandem-Schaufelgitter einer Strömungs-Kraft- oder Arbeitsmaschine mit zumindest zwei im wesentlichen unmittelbar hintereinander angeordneten Schaufelreihen im Rotor oder Stator, wobei das Gitter der zweiten oder folgenden Schaufelreihe eine größere Zahl von Schaufeln als dasjenige der davor angeordneten Schaufelreihe aufweist. Derartige Tandem-Schaufelgitter sind grundsätzlich bekannt und beispielsweise in der CH-A-428 071 oder in der DE 39 24 829 C1 gezeigt.

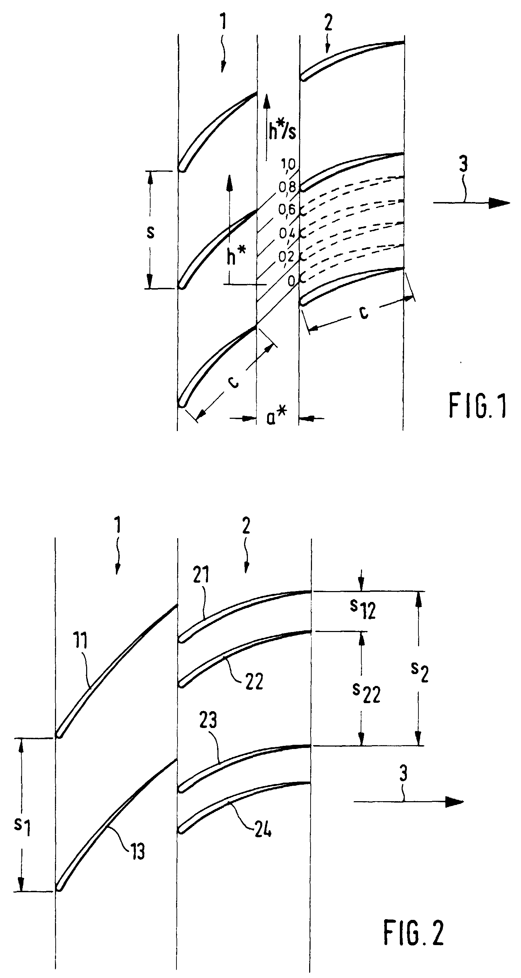

Diese sogenannten Tandem-Schaufelgitter können insbesondere bei Turbo-Flugtriebwerken im Verdichter oder in der Turbine vorgesehen sein, um die zu realisierenden Druckverhältnisse mit möglichst wenig Stufen zu verwirklichen. Dies führt zu einer gewünschten Gewichtsreduzierung, jedoch ergibt sich damit andererseits eine höhere aerodynamische Belastung der einzelnen Stufe. Speziell für den Fall einer Verdichterstufe bedeutet dies, daß u. a. im Rotor bezüglich des Relativsystems bzw. in dem sich anschließenden Stator bezüglich des Absolutsystemes eine größere Umlenkung und/oder Verzögerung der Strömung erfolgen muß. Dies ist aber nur begrenzt möglich, da eine zu hohe aerodynamische Belastung des Gitters zu einer Ablösung der Strömung und somit zu erhöhten Druckverlusten führt. Diese Verluste können reduziert werden, wenn die Gitterbelastung auf zwei im wesentlichen unmittelbar aufeinander folgende bzw. umittelbar hintereinander angeordnete Schaufelreihen im Rotor oder im Stator aufgeteilt wird. Dabei können die beiden im wesentlichen unmittelbar hintereinander angeordneten Schaufelreihen in axialer Richtung sowie in Umfangsrichtung unterschiedlich zueinander positioniert werden, was Auswirkungen auf die Druckzahl und den Wirkungsgrad hat. Hierzu wird auf die Untersuchungen von Linnemann in der DE-Zeitschrift "Konstruktion", 1964, Heft 4, Seite 128, verwiesen. Bezüglich des Begriffs "im wesentlichen unmittelbar" wird kurz auf die später noch näher erläuterte Fig. 1 verwiesen, die der soeben genannten Literaturstelle (Linnemann) entnommen ist. Hier erkennt man die beiden Schaufelreihen 1, 2 beispielsweise eines Rotors, die um das Maß a* voneinander beabstandet sind, und zwischen die keine weitere Schaufelreihe beispielsweise eines Stators hineinragt. Jeder Wert a*, der kleiner ist als die Sehnenlänge c, und der sogar negative Werte annehmen kann, soll im wesentlichen unmittelbar hintereinander angeordnete Schaufelreihen 1, 2 repräsentieren, solange zwischen diese Schaufelreihen keine weitere Schaufelreihe hineinragt.

Ist nun die zweite oder folgende Schaufelreihe aerodynamisch derart hoch belastet, daß in dieser Schaufelreihe eine größere Zahl von Schaufeln vorgesehen werden müßte als in der davor angeordneten Schaufelreihe, so können sich jedoch für einen Teil der Schaufeln in der zweiten Schaufelreihe ungünstige Positionen in Umfangsrichtung im Hinblick auf Druckzahl und Wirkungsgrad ergeben. Für diese Problematik Abhilfemaßnahmen aufzuzeigen, ist Aufgabe der vorliegenden Erfindung.

Zur Lösung dieser Aufgabe ist vorgesehen, daß das Gitter mit der größeren Zahl vor Schaufeln ungleichmäßig geteilt ist. Insbesondere kann diese ungleichmäßige Teilung periodisch gestaltet sein. In einer bevorzugten Ausführungsform weist die in Strömungsrichtung zweite Schaufelreihe doppelt so viele Schaufeln auf wie die erste Schaufelreihe, wobei der Abstand zwischen zwei Schaufeln in der ersten Schaufelreihe gleich der Summe zweier aufeinanderfolgenden Schaufelabstände in der zweite Schaufelreihe ist und der Teilungs-Quotient der Schaufelabstände in der zweiten Schaufelreihe im Bereich zwischen 0,4 und 1,0 liegt. Auch in dieser bevorzugten Ausführungsform kann sich die ungleichmäßige Teilung periodisch wiederholen.

Näher erläutert wird die Erfindung anhand der in Fig. 2 gezeigten Prinzipskizze eines bevorzugten Ausführungsbeispieles, während Fig. 1 einen Auszug der oben genannten Literaturstelle (Linnemann) zeigt und der Erläuterung der grundlegenden Verhältnisse dient.

Gezeigt sind jeweils Teil-Abwicklungen eines aus zwei Schaufelreihen 1, 2 bestehenden Tandem-Schaufelgitters einer Strömungs-Kraft- oder Arbeitsmaschine. Die beiden Schaufelreihen 1, 2 sind im wesentlichen unmittelbar hintereinander angeordnet, d. h. zwischen die beiden Schaufelreihen 1, 2, die beispielsweise am Rotor vorgesehen sind, ragt keine weitere Schaufelreihe des Stators hinein, die Axialkomponente der Strömungsrichtung ist durch den horizontalen Pfeil 3 dargestellt.

Wie das bevorzugte Ausführungsbeispiel nach Fig. 2 zeigt, sind in der zweiten Schaufelreihe 2 doppelt so viele Schaufeln 21, 22, 23, 24 vorgesehen als in der ersten Schaufelreihe 1, von der die Schaufeln 11, 13 dargestellt sind. Dabei ist die Anordnung so getroffen, daß der Abstand s₁ zwischen den beiden Schaufeln 11, 13 gleich ist der Summe zweier aufeinanderfolgender Schaufelabstände s₁₂ und s₂₂. zwischen den Schaufeln 21 und 22 bzw. 22 und 23 der zweiten Schaufelreihe 2. Der Abstand s₁ ist somit gleich dem Abstand s₂, welcher sich als Summe von s₁₂ und s₂₂ darstellt. Gewählt wurde dabei für die Schaufelreihe 2 eine höhere Zahl von Schaufeln als in der Schaufelreihe 1, um die aerodynamische Belastung in der zweite Schaufelreihe 2 zu verringern. Es soll somit auch in der zweiten Schaufelreihe 2 ein möglichst günstiges Teilungsverhältnis s/c erzielt werden.

Nun ist es aber bekannt, daß die Positionierung der Schaufeln der zweiten Schaufelreihe 2 bezüglich der ersten Schaufelreihe 1 sowohl in Umfangsrichtung als auch in axialer Richtung von wesentlichem Einfluß auf Druckzahl und Wirkungsgrad ist. Dies wird im folgenden kurz anhand von Fig. 1 erläutert. In dieser Figur ist mit s generell der Abstand zwischen zwei Schaufeln einer Schaufelreihe bezeichnet, während wie üblich die Sehnenlänge des Schaufelprofils mit c bezeichnet ist. Der axiale Abstand zwischen der ersten Schaufelreihe 1 und der zweiten Schaufel reihe 2 ist mit a* bezeichnet, während h* die in Umfangsrichtung weisende Ordinate darstellt und angibt, wie weit eine Schaufel der zweiten Schaufelreihe 2 gegenüber der zugeordneten Schaufel der ersten Schaufelreihe 1 versetzt ist. In Fig. 1 numerisch angegeben ist dabei das Verhältnis h*/s für die verschiedenen strichliert dargestellten Schaufelpositionen in der zweiten Schaufelreihe 2.

Wären nun - wie in Fig. 2 gezeigt - in der zweiten Schaufelreihe 2 beispielsweise doppelt so viele Schaufeln wie in der ersten Schaufelreihe 1 vorgesehen und bildeten diese Schaufeln 21, 22, 23, 24 der zweiten Schaufelreihe 2 ein periodisch gleichmäßig geteiltes Gitter, so käme jede zweite Schaufel 22, 24 in dieser Schaufelreihe 2 in eine ungünstige Position in Umfangsrichtung, d. h. für jede zweite Schaufel 22, 24 ergäbe sich eine ungünstige h*/s-Positionierung (entsprechend Fig. 1). Erfindungsgemäß ist daher vorgesehen, die zweite oder allgemein die folgende Schaufelreihe 2 mit einer hier periodisch ungleichmäßigen Teilung zu versehen bzw. das entsprechende Schaufelgitter periodisch ungleichmäßig geteilt auszuführen. In anderen Worten bedeutet dies, daß der Abstand s₁₂ ungleich ist dem Abstand s₂₂. Damit können die Schaufeln 22, 24 nach dem Ausführungsbeispiel gemäß Fig. 2 in verlustärmeren h*/s-Bereichen positioniert werden. Jedoch sollte diese Verschiebung gegenüber einer periodisch gleichmäßigen Teilung nicht zu groß ausfallen, da ansonsten die Schaufeln 21 und 22 bzw. 23 und 24 zu unterschiedlich und zu andersartig belastet werden würden, was wiederum ungünstige Auswirkungen auf die Strömungsverhältnisse hat. Besonders vorteilhafte Verhältnisse stellen sich bei Vorsehen doppelt so vieler Schaufeln in der zweiten Schaufelreihe 2 gegenüber der ersten Schaufelreihe 1 dann ein, wenn der Teilungs-Quotient s₁₂/s₂₂ der Schaufelabstände in der zweiten Schaufelreihe 2 im Bereich zwischen 0,4 und 1,0 liegt.

Generell führt bei Einsatz eines Tandem-Schaufelgitters die Verwendung einer ungleichmäßig geteilten zweiten oder folgenden Schaufelreihe 2 zu geringeren Verlusten und somit zu einem besseren Gesamtwirkungsgrad der Strömungs-Kraft- oder Arbeitsmaschine. Dabei kann selbstverständlich in der zweiten oder folgenden Schaufelreihe 2 auch ein anderes, insbesondere auch nicht ganzzahliges Vielfaches von Schaufeln gegenüber der ersten Schaufelreihe 1 vorgesehen sein, als dies in Fig. 2 gezeigt ist. Stets können diese mehreren Schaufeln bei ungleichmäßiger Teilung optimal im Hinblick auf Druckzahl und Wirkungsgrad positioniert werden, wobei sich insbesondere bei ganzzahligen Vielfachen die ungleichmäßigen Teilungen periodisch wiederholen. Dabei sei nochmals darauf hingewiesen, daß der wesentliche Gedanke der vorliegenden Erfindung in der ungleichmäßigen Teilung liegt. Der Sonderfall einer sich periodisch wiederholenden ungleichmäßigen Teilung macht nur Sinn bei Schlaufelzahlen mit ganzzahligen Vielfachen.

## Patentansprüche

1. Tandem-Schaufelgitter einer Strömungs-Kraft oder Arbeitsmaschine mit zumindest zwei unmittelbar hintereinander angeordneten Schaufelreihen (1, 2) im Rotor oder Stator, wobei das Gitter der zweiten oder folgenden Schaufelreihe (2) eine größere Zahl von Schaufeln (21, 22, 23, 24) als dasjenige der davor angeordneten Schaufelreihe (1) aufweist.
dadurch gekennzeichnet, daß das Gitter mit der größeren Zahl von Schaufeln ungleichmäßig geteilt ist.

2. Tandem-Schaufel gitter nach Anspruch 1,
dadurch gekennzeichnet, daß die in Strömungsrichtung zweite Schaufelreihe (2) ein ganzzahliges Vielfaches der Schaufeln der ersten Schaufelreihe (1) aufweist und periodisch ungleichmäßig geteilt ist.

3. Tandem-Schaufelgitter nach Anspruch 2,
dadurch gekennzeichnet, daß die zweite Schaufelreihe (2) doppelt so viele Schaufeln wie die erste Schaufelreihe (1) aufweist.

4. Tandem-Schaufelgitter nach einem der Ansprüche 1 bis 3,
dadurch gekennzeichnet, daß der Abstand (s₁) zwischen zwei Schaufeln (11, 13) in der ersten Schaufelreihe (1) im wesentlichen gleich der Summe (s₂) zweier aufeinander folgender Schaufelabstände (s₁₂, s₂₂) in der zweiten Schaufelreihe (2) ist und daß der Teilungs-Quotient (s₁₂/s₂₂) der Schaufelabstände in der zweiten Schaufelreihe (2) im Bereich zwischen 0,4 und 1,0 liegt.

## Claims

1. A tandem turbine-blade cascade for a jet power or working engine with at least two blade rings (1, 2) arranged immediately one after the other in the rotor or the stator, whereby the cascade of the second or following blade ring (2) has a greater number of blades (21, 22, 23, 24) than that of the earlier arranged blade ring (1),
characterised in that the cascade with the greater number of blades is unevenly distributed.

2. A tandem turbine-blade cascade according to Claim 1,
characterised in that the second blade ring (2) in the direction of the flow has an integral multiple of the blades of the first blade ring (1) and is periodically unevenly distributed.

3. A tandem turbine-blade cascade according to Claim 2,
characterised in that the second blade ring (2) has double the number of blades of the first blade ring (1).

4. A tandem turbine-blade cascade according to one of the Claims 1 to 3,
characterised in that the distance (si) between two blades in the first blade ring (1) is essentially equal to the sum of two adjacently following blade separations (s₁₂, s₂₂) in the second blade ring (2) and that the distribution quotient (s₁₂/s₂₂) of the blade separations in the second blade ring (2) lies in the region between 0.4 and 1.0.

## Revendications

1. Grille d'aubes tandem pour une turbomachine ou une machine productrice de travail, avec au moins deux séries d'aubes (1, 2) disposées directement l'une derrière l'autre dans le rotor ou dans le stator, dans laquelle la grille de la deuxième série d'aubes (2) ou de la série d'aubes suivante (2) présente un nombre d'aubes (21, 22, 23, 24) plus grand que celui de la série d'aubes (1) disposée en avant,
caractérisée en ce que
la grille qui est pourvue du plus grand nombre d'aubes est divisée de façon irrégulière.

2. Grille d'aubes tandem selon la revendication 1,
caractérisée en ce que
la deuxième série d'aubes (2) dans le sens de l'écoulement présente un multiple entier d'aubes par rapport à celles de la première série d'aubes (1), et est divisée périodiquement de façon irrégulière.

3. Grille d'aubes tandem selon la revendication 2,
caractérisée en ce que
la deuxième série d'aubes (2) présente deux fois plus d'aubes que la première série d'aubes (1).

4. Grille d'aubes tandem selon l'une des revendications 1 à 3,
caractérisée en ce que
- la distance (s₁), qui est comprise entre deux aubes (11, 13) dans la première série d'aubes (1) est sensiblement égale à la somme (s₂) des deux distances (s12, s22) des aubes qui se suivent l'une l'autre dans la deuxième série d'aubes (2), et
- le quotient de division (s12/s22) des distances entre les aubes dans la deuxième série d'aubes (2), se trouve compris entre 0,4 et 1,0.
